# EUROPEAN PATENT APPLICATION

(11) **EP 4 738 962 A1**
(43) Date of publication of application: **06.05.2026**
(21) Application number: 23943053.1
(22) Date of filing: 30.06.2023
(51) Int. Cl.: H04W 72/23

(54) **COMMUNICATION INDICATION METHOD, TERMINAL, AND ACCESS NETWORK DEVICE**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/105444
(87) International publication number: WO 2025/000564

(57) **Abstract**

The present disclosure relates to a communication indication method, a terminal, and an access network device. The method comprises: acquiring an uplink (UL) subband configured by an access network device, and determining a frequency domain resource allocation (FDRA) field in downlink control information (DCI) used for scheduling a physical uplink shared channel (PUSCH) transmitted in the UL subband; and according to the FDRA field, determining a frequency domain resource used for uplink transmission the UL subband. Communication efficiency is effectively improved.

## Description

### TECHNICAL FIELD

The disclosure relates to the field of communication technologies, and in particular to a method for communication indication, a terminal, and an access network device.

### BACKGROUND

A release 18 (Rel-18) full-duplex enhancement item may study full-duplex schemes. For example, a network side device may simultaneously perform data reception and transmission within one slot. Currently, 3GPP has determined that the Rel-18 full-duplex enhancement only targets a base station, while a terminal side device still only supports half-duplex, thus leading to reduced communication efficiency.

### SUMMARY

For the problem of low communication efficiency in the related art, embodiments of the disclosure provide a method for communication indication, a terminal, and an access network device.

According to a first aspect of embodiments of the disclosure, a method for communication indication is provided. The method includes: determining an uplink (UL) subband; receiving downlink control information (DCI), in which the DCI is configured to schedule a physical uplink shared channel (PUSCH) transmitted in the UL subband; and determining a UL frequency domain resource based on the DCI, in which the UL frequency domain resource is a resource used for UL transmission in the UL subband.

By means of the solution of the disclosure, the communication efficiency may be improved.

According to a second aspect of embodiments of the disclosure, a method for communication indication is provided. The method includes: configuring an UL subband for a terminal; and sending DCI, in which the DCI is configured to schedule a PUSCH transmitted in the UL subband; the DCI indicates a UL frequency domain resource; and the UL frequency domain resource is a resource used for UL transmission in the UL subband.

According to a third aspect of embodiments of the disclosure, a method for communication indication is provided. The method includes: configuring, by a network device, an UL subband for a terminal; determining, by the terminal, the UL subband; sending, by the network device, DCI, in which the DCI is configured to schedule a PUSCH transmitted in the UL subband; and receiving, by the terminal, the DCI, and determining a UL frequency domain resource based on the DCI, in which the UL frequency domain resource is a resource used for UL transmission in the UL subband.

According to a fourth aspect of embodiments of the disclosure, a terminal is provided. The terminal includes: one or more processors, in which the terminal is configured to implement the method in the first aspect.

According to a fifth aspect of embodiments of the disclosure, an access network device is provided. The access network device includes: one or more processors, in which the access network device is configured to implement the method in the second aspect.

According to a sixth aspect of embodiments of the disclosure, a communication system is provided. The communication system includes: a terminal and a network device, in which the terminal is configured to perform the method in the first aspect, and the network device is configured to perform the method in the second aspect.

According to a seventh aspect of embodiments of the disclosure, a storage medium is provided. The storage medium stores instructions that, when executed on a communication device, cause the communication device to implement the method in any of the second aspect or the second aspect.

### BRIEF DESCRIPTION OF THE DRAWINGS

In order to more clearly illustrate technical solutions in embodiments of the disclosure, the accompanying drawings required for describing embodiments are introduced below. The following accompanying drawings are merely some embodiments of the disclosure and do not specifically limit the scope of protection of the disclosure.
FIG. 1A is a schematic diagram illustrating an architecture of a communication system according to an embodiment of the disclosure.
FIG. 1B is a schematic diagram illustrating a frequency domain relationship between an uplink (UL) subband and a UL bandwidth part (BWP) configured by a base station according to a possible embodiment.
FIG. 1C is a schematic diagram illustrating a frequency domain relationship between a UL subband and a UL BWP configured by a base station according to a possible embodiment.
FIG. 2 is a schematic diagram illustrating an interaction of a method for communication indication according to an embodiment of the disclosure.
FIG. 3A is a flowchart illustrating a method for communication indication according to an embodiment of the disclosure.
FIG. 3B is a flowchart illustrating a method for communication indication according to an embodiment of the disclosure.
FIG. 4A is a flowchart illustrating a method for communication indication according to an embodiment of the disclosure.
FIG. 4B is a flowchart illustrating a method for communication indication according to an embodiment of the disclosure.
FIG. 5 is a flowchart illustrating a method for communication indication according to an embodiment of the disclosure.
FIG. 6 is a flowchart illustrating a method for communication indication according to an embodiment of the disclosure.
FIG. 7A is a block diagram illustrating a terminal according to an embodiment of the disclosure.
FIG. 7B is a block diagram illustrating an access network device according to an embodiment of the disclosure.
FIG. 8A is a block diagram illustrating a communication device 8100 according to an embodiment of the disclosure.
FIG. 8B is a block diagram illustrating a chip 8200 according to an embodiment of the disclosure.
FIG. 9A is a schematic diagram illustrating a BWP according to an embodiment of the disclosure.
FIG. 9B is a schematic diagram illustrating a BWP according to an embodiment of the disclosure.
FIG. 9C is a schematic diagram illustrating a BWP and a UL subband according to an embodiment of the disclosure.
FIG. 9D is a schematic diagram illustrating a BWP and a UL subband according to an embodiment of the disclosure.

### DETAILED DESCRIPTION

Embodiments of the disclosure provide a method for communication indication, a terminal, and an access network device.

In a first aspect, embodiments of the disclosure provide a method for communication indication. The method includes: determining an uplink (UL) subband; receiving downlink control information (DCI), in which the DCI is configured to schedule a physical uplink shared channel (PUSCH) transmitted in the UL subband; and determining a UL frequency domain resource based on the DCI, in which the UL frequency domain resource is a resource used for UL transmission in the UL subband.

In the above embodiment, a terminal may determine the resource used for the UL transmission in the UL subband, thus providing a solid technical foundation for achieving full-duplex. Further, the UL frequency domain applied in a downlink (DL) slot is implemented by the DCI, no new signaling is introduced, forward compatibility with existing standards is maintained, and technical implementation complexity of the terminal is reduced.

In combination with some embodiments of the first aspect, in some embodiments, the DCI includes a frequency domain resource assignment (FDRA) field, and the FDRA field is configured to determine the UL frequency domain resource.

In the above embodiment, the terminal may determine the UL frequency domain resource based on the FDRA field in the DCI, thus providing a necessary condition for achieving full-duplex communication. Further, with utilizing the FDRA field in the DCI, no new information or indication field is added into the DCI, thus, occupation of communication resources by the DCI is not increased, and communication resources are saved.

In combination with some embodiments of the first aspect, in some embodiments, determining the UL frequency domain resource based on the DCI includes: determining the UL frequency domain resource based on a bitmap in the FDRA field, in which the UL frequency domain resource includes a resource block group (RBG), and the bitmap indicates an RBG index corresponding to the RBG in the UL frequency domain resource.

In the above embodiment, the terminal may indicate the RBG index corresponding to the RBG in the UL frequency domain resource based on the bitmap in the FDRA field, thus providing a necessary condition for achieving full-duplex communication. Further, with utilizing the bitmap to indicate the RBG index corresponding to the RBG, the corresponding RBG may be indicated accurately, and an accuracy of determining the UL frequency domain resource is improved.

In combination with some embodiments of the first aspect, in some embodiments, determining the UL frequency domain resource based on the bitmap in the FDRA field includes: mapping a most significant bit of the bitmap in the FDRA field to an RBG having a maximum RBG index in a UL bandwidth part (BWP), and sequentially mapping other bits of the bitmap to other RBGs; or mapping a most significant bit of the bitmap in the FDRA field to an RBG having a minimum RBG index in a UL BWP, and sequentially mapping other bits of the bitmap to other RBGs.

In the above embodiment, the terminal may map the bitmap in the FDRA field to the RBG index corresponding to the RBG in the UL BWP, thus providing a necessary condition for achieving full-duplex communication. Further, with utilizing the bitmap to indicate the RBG index corresponding to the RBG, the corresponding RBG may be indicated accurately, an accuracy of determining the UL frequency domain resource in the UL BWP is improved, and resource waste is avoided.

In combination with some embodiments of the first aspect, in some embodiments, determining the UL frequency domain resource based on the bitmap in the FDRA field further includes: mapping a most significant bit of the bitmap in the FDRA field to an RBG having a maximum RBG index in the UL subband, and sequentially mapping other bits of the bitmap to other RBGs; or mapping a most significant bit of the bitmap in the FDRA field to an RBG having a minimum RBG index in the UL subband, and sequentially mapping other bits of the bitmap to other RBGs.

In the above embodiment, the terminal may map the bitmap in the FDRA field to the RBG index corresponding to the RBG in the UL subband, thus providing a necessary condition for achieving full-duplex communication. Further, with utilizing the bitmap to indicate the RBG index corresponding to the RBG, the corresponding RBG may be indicated accurately, an accuracy of determining the UL frequency domain resource in the UL subband is improved, and resource waste is avoided.

In combination with some embodiments of the first aspect, in some embodiments, an RBG corresponding to a position encoded as 1 in the bitmap is used for the UL transmission.

In the above embodiment, the terminal may determine the RBG corresponding to the position encoded as 1 in the bitmap in the FDRA field, thus providing a foundation for achieving full-duplex communication. Further, with utilizing an encoded value at a specific position of the bitmap to indicate whether the corresponding RBG is used for the UL transmission, the RBG used for the UL transmission may be indicated accurately, and an accuracy of the indication is improved.

In combination with some embodiments of the first aspect, in some embodiments, the bitmap indicates a first frequency domain resource, the first frequency domain resource includes a first RBG, the first RBG is not located within a frequency domain range of the UL subband, and the first RBG does not belong to the UL frequency domain resource.

In the above embodiment, the terminal may determine, via the bitmap, the first frequency domain resource that is not located within the frequency domain range of the UL subband, thus providing a foundation for achieving full-duplex communication. Further, the first frequency domain resource is not located within the frequency domain range of the UL subband, use of the first frequency domain resource may be avoided, waste of communication resources may be avoided, and utilization of communication resources may be improved.

In combination with some embodiments of the first aspect, in some embodiments, the method further includes: determining an RBG index corresponding to an RBG in a UL BWP based on an active UL BWP; or determining an RBG index corresponding to an RBG in a UL BWP based on an initial UL BWP.

In the above embodiment, the terminal may determine the RBG index corresponding to the RBG, thus providing a necessary condition for achieving full-duplex communication. Further, with utilizing the active UL BWP and the initial UL BWP, no new UL BWP is introduced, forward compatibility with existing standards is maintained, and the technical implementation complexity of the terminal is reduced.

In combination with some embodiments of the first aspect, in some embodiments, the method further includes: determining a granularity of an RBG in a UL BWP based on a size of an active UL BWP; or determining a granularity of an RBG in the UL subband based on a size of an active UL BWP.

In the above embodiment, the terminal may determine the granularity of the RBG, thus providing a necessary condition for achieving full-duplex communication. Further, with utilizing the size of the active UL BWP to determine the granularity of the RBG, forward compatibility with existing standards is maintained, and the technical implementation complexity of the terminal is reduced.

In combination with some embodiments of the first aspect, in some embodiments, a frequency domain resource allocation (RA) type for the UL transmission is a resource allocation type 0 (RA type 0).

In combination with some embodiments of the first aspect, in some embodiments, the DCI is any one of: DCI format 0-0; DCI format 0-1; DCI format 0-2; or DCI format 0-3.

In a second aspect, embodiments of the disclosure provide a method for communication indication. The method includes: configuring a UL subband for a terminal; and sending DCI, in which the DCI is configured to schedule a PUSCH transmitted in the UL subband; the DCI indicates a UL frequency domain resource; and the UL frequency domain resource is a resource used for UL transmission in the UL subband.

In the above embodiment, a network device configures the resource used for the UL transmission in the UL subband for the terminal, thus providing a solid technical foundation for achieving full-duplex. Further, the UL frequency domain applied in a DL slot is implemented by the DCI, no new signaling is introduced, forward compatibility with existing standards is maintained, and technical implementation complexity of the network device is reduced.

In combination with some embodiments of the second aspect, in some embodiments, the DCI includes a FDRA field, and the FDRA field is configured to determine the UL frequency domain resource.

In combination with some embodiments of the second aspect, in some embodiments, a bitmap in the FDRA field is configured to determine the UL frequency domain resource, in which the UL frequency domain resource includes an RBG, and the bitmap indicates an RBG index corresponding to the RBG in the UL frequency domain resource.

In combination with some embodiments of the second aspect, in some embodiments, a mapping relationship between the bitmap in the FDRA field and the UL frequency domain resource includes: mapping a most significant bit of the bitmap in the FDRA field to an RBG having a maximum RBG index in a UL BWP, and sequentially mapping other bits of the bitmap to other RBGs; or mapping a most significant bit of the bitmap in the FDRA field to an RBG having a minimum RBG index in a UL BWP, and sequentially mapping other bits of the bitmap to other RBGs.

In combination with some embodiments of the second aspect, in some embodiments, a mapping relationship between the bitmap in the FDRA field and the UL frequency domain resource further includes: mapping a most significant bit of the bitmap in the FDRA field to an RBG having a maximum RBG index in the UL subband, and sequentially mapping other bits of the bitmap to other RBGs; or mapping a most significant bit of the bitmap in the FDRA field to an RBG having a minimum RBG index in the UL subband, and sequentially mapping other bits of the bitmap to other RBGs.

In combination with some embodiments of the second aspect, in some embodiments, an RBG corresponding to a position encoded as 1 in the bitmap is used for the UL transmission.

In combination with some embodiments of the second aspect, in some embodiments, the bitmap indicates a first frequency domain resource, the first frequency domain resource is not located within a frequency domain range of the UL subband, and a first RBG does not belong to the UL frequency domain resource.

In combination with some embodiments of the second aspect, in some embodiments, an RBG index corresponding to an RBG in a UL BWP is determined by an active UL BWP; or an RBG index corresponding to an RBG in a UL BWP is determined by an initial UL BWP.

In combination with some embodiments of the second aspect, in some embodiments, the method further includes: determining a granularity of an RBG in a UL BWP based on a size of an active UL BWP; or determining a granularity of an RBG in the UL subband based on a size of an active UL BWP.

In combination with some embodiments of the second aspect, in some embodiments, a frequency domain RA type for the UL transmission is RA type 0.

In combination with some embodiments of the second aspect, in some embodiments, the DCI is any one of: DCI format 0-0; DCI format 0-1; DCI format 0-2; or DCI format 0-3.

In a third aspect, embodiments of the disclosure provide a method for communication indication. The method includes: configuring, by a network device, a UL subband for a terminal; determining, by the terminal, the UL subband; sending, by the network device, DCI, in which the DCI is configured to schedule a PUSCH transmitted in the UL subband; and receiving, by the terminal, the DCI, and determining a UL frequency domain resource based on the DCI, in which the UL frequency domain resource is a resource used for UL transmission in the UL subband.

In combination with some embodiments of the third aspect, in some embodiments, the DCI includes a FDRA field, and the FDRA field is configured to determine the UL frequency domain resource.

In combination with some embodiments of the third aspect, in some embodiments, determining the UL frequency domain resource based on the DCI includes: determining, by the terminal, the UL frequency domain resource based on a bitmap in the FDRA field, in which the UL frequency domain resource includes an RBG, and the bitmap indicates an RBG index corresponding to the RBG in the UL frequency domain resource.

In combination with some embodiments of the third aspect, in some embodiments, determining the UL frequency domain resource based on the bitmap in the FDRA field includes: mapping, by the terminal, a most significant bit of the bitmap in the FDRA field to an RBG having a maximum RBG index in a UL BWP, and sequentially mapping other bits of the bitmap to other RBGs; or mapping, by the terminal, a most significant bit of the bitmap in the FDRA field to an RBG having a minimum RBG index in a UL BWP, and sequentially mapping other bits of the bitmap to other RBGs.

In combination with some embodiments of the third aspect, in some embodiments, determining the UL frequency domain resource based on the bitmap in the FDRA field further includes: mapping, by the terminal, a most significant bit of the bitmap in the FDRA field to an RBG having a maximum RBG index in the UL subband, and sequentially mapping other bits of the bitmap to other RBGs; or mapping, by the terminal, a most significant bit of the bitmap in the FDRA field to an RBG having a minimum RBG index in the UL subband, and sequentially mapping other bits of the bitmap to other RBGs.

In combination with some embodiments of the third aspect, in some embodiments, an RBG corresponding to a position encoded as 1 in the bitmap is used for the UL transmission.

In combination with some embodiments of the third aspect, in some embodiments, the bitmap indicates a first frequency domain resource, the first frequency domain resource is not located within a frequency domain range of the UL subband, and a first RBG does not belong to the UL frequency domain resource.

In combination with some embodiments of the third aspect, in some embodiments, the method further includes: determining, by the terminal, an RBG index corresponding to an RBG in a UL BWP based on an active UL BWP; or determining, by the terminal, an RBG index corresponding to an RBG in a UL BWP based on an initial UL BWP.

In combination with some embodiments of the third aspect, in some embodiments, the method further includes: determining a granularity of an RBG in a UL BWP based on a size of an active UL BWP; or determining a granularity of an RBG in the UL subband based on a size of an active UL BWP.

In combination with some embodiments of the third aspect, in some embodiments, a frequency domain RA type for the UL transmission is RA type 0.

In combination with some embodiments of the third aspect, in some embodiments, the DCI is any one of: DCI format 0-0; DCI format 0-1; DCI format 0-2; or DCI format 0-3.

In a fourth aspect, embodiments of the disclosure provide a terminal. The terminal includes at least one of a transceiver module or a processing module. The terminal is configured to implement optional implementations of the first aspect.

In a fifth aspect, embodiments of the disclosure provide an access network device. The access network device includes at least one of a transceiver module or a processing module. The access network device is configured to implement optional implementations of the second aspect.

In a sixth aspect, embodiments of the disclosure provide a terminal. The terminal includes: one or more processors, in which the terminal is configured to implement optional implementations of the first aspect.

In a seventh aspect, embodiments of the disclosure provide an access network device. The access network device includes: one or more processors, in which the access network device is configured to implement optional implementations of the second aspect.

In an eighth aspect, embodiments of the disclosure provide a communication system. The communication system includes: a terminal and an access network device. The terminal is configured to perform the method as described in optional implementations of the first aspect, the fourth aspect and the sixth aspect, and the access network device is configured to perform the method as described in optional implementations of the second aspect, the fifth aspect and the seventh aspect.

In a ninth aspect, embodiments of the disclosure provide a storage medium. The storage medium stores instructions that, when executed on a communication device, cause the communication device to implement the method as described in optional implementations of the first aspect, the second aspect and the third aspect.

In a tenth aspect, embodiments of the disclosure provide a program product. When the program product is executed by a communication device, the communication device is caused to implement the method as described in optional implementations of the first aspect, the second aspect and the third aspect.

In an eleventh aspect, embodiments of the disclosure provide a computer program. When the computer program is running on a computer, the computer is caused to implement the methods as described in optional implementations of the first aspect, the second aspect and the third aspect.

In a twelfth aspect, embodiments of the disclosure provide a chip or a chip system. The chip or the chip system includes a processing circuitry configured to implement the method as described in optional implementations of the first aspect, the second aspect and the third aspect.

It may be understood that the terminal, the access network device, the communication system, the storage medium, the program product, the computer program and the chip or a chip system are all used to implement the method in embodiments of the disclosure. Thus, regarding beneficial effects they may achieve, reference may made be to the beneficial effects in the corresponding methods, which may not be repeated herein.

Embodiments of the disclosure provide a method for communication indication, a terminal, and an access network device. In some embodiments, terms such as "method for communication indication", "method for information processing" and "communication method" may be used interchangeably, terms such as "apparatus for communication indication", "apparatus for information processing", and "communication apparatus" may be used interchangeably, and terms such as "information processing system" and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one selected from A and B for execution (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one selected from A and B for execution (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity, or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "comprising A", "including A", "used to indicate A", and "carrying A" may be interpreted as directly carrying A or indirectly indicating A.

In some embodiments, the terms such as "in response to...", "in response to determining...", "in the case of/that...", "when", "upon...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and the device may be interpreted as physical or virtual, and their names are not limited to the names recorded in embodiments. In some cases, the apparatus and the device may also be understood as "equipment", "device", "circuit", "network element", "node", "function", "unit", "section", "system", "network", "chip", "chip system", "entity", and "subject".

In some embodiments, the term such as "network" may be interpreted as an apparatus (e.g., an access network device, a core network device, etc.) included in the network.

In some embodiments, "access network device (AN device)" may be referred to as "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "BWP" and the like.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, the acquisition of data, information, etc. may comply with the laws and regulations of the country where the data is obtained.

In some embodiments, data, information, etc. may be obtained with the consent from users.

In addition, each element, each row, or each column in the table of embodiments of the disclosure may be implemented as an independent embodiment, and the combination of any elements, any rows, or any columns may also be implemented as an independent embodiment.

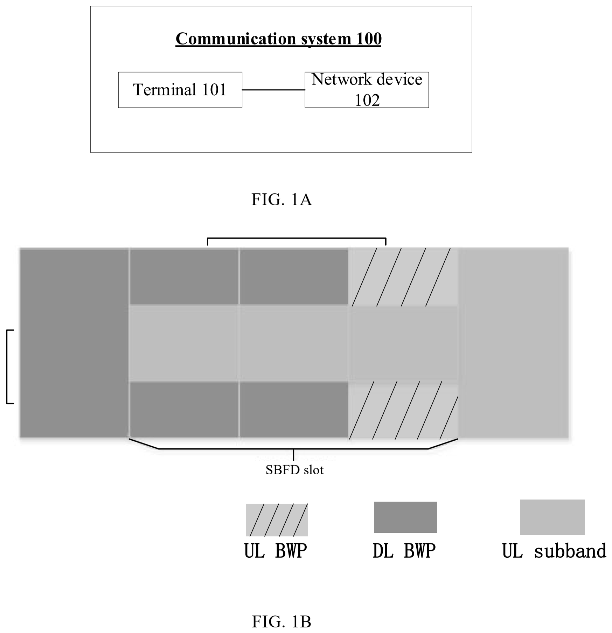

FIG. 1A is a schematic diagram illustrating an architecture of a communication system according to an embodiment of the disclosure. As shown in FIG. 1A, the communication system 100 may include a terminal 101 and an access network device 102.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device 102 may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but is not limited herein.

It may be understood that the communication system described in embodiments of the disclosure aims to more clearly illustrate the technical solution of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects other than those shown in FIG. 1A. The number and form of the subjects are arbitrary. The subjects may be physical or virtual. The connection relationship between the subjects is an example. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-wideband (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In a possible embodiment, in a full-duplex communication scheme, a network side device may simultaneously perform data reception and transmission within one slot. The enhancement for full-duplex only targets a gNB, while a terminal side device still only supports half-duplex. The gNB may configure a UL subband for UL data transmission within a DL slot for a full-duplex terminal, and schedule the UL data transmission of the terminal within a time-frequency range of the UL subband. In general, a size and a frequency domain position of an UL subband configured by a base station are different from a size and a frequency domain position of Wideband an active UL BWP.

FIG. 1B is a schematic diagram illustrating a frequency domain relationship between a UL subband and a UL BWP configured by a base station according to a possible embodiment. As shown in FIG. 1B, the figure illustrates a plurality of subband full duplex (SBFD) slots. In the slots, a frequency domain range occupied by the UL subband is completely included within a frequency domain range of the UL BWP.

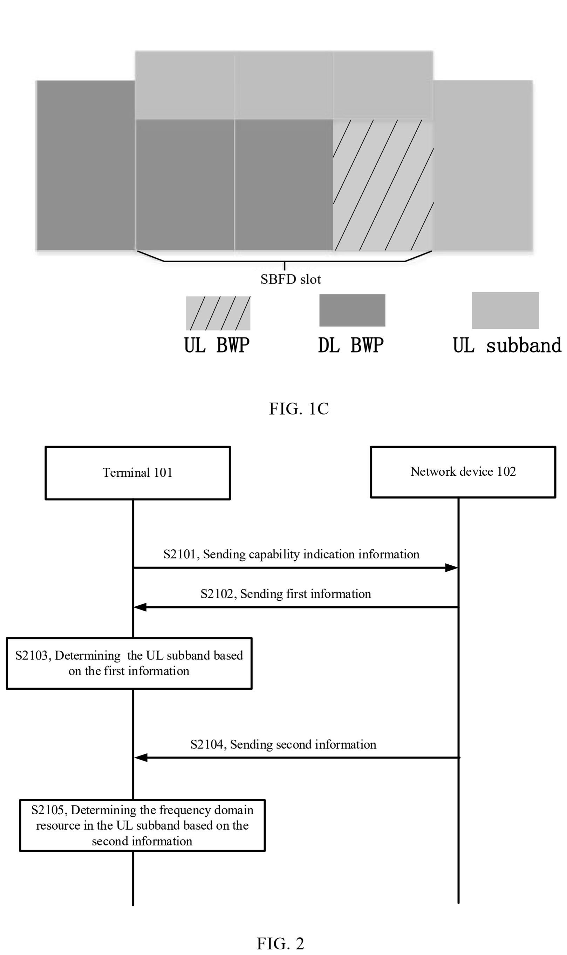

FIG. 1C is a schematic diagram illustrating a frequency domain relationship between a UL subband and a UL BWP configured by a base station according to a possible embodiment. As shown in FIG. 1C, the figure illustrates a plurality of SBFD slots. In the slots, a frequency domain range occupied by the UL subband is not completely included within a frequency domain range of the UL BWP, and a part of the UL subband extends beyond the frequency domain range of the UL BWP.

In a possible embodiment, a conclusion is reached regarding a transmission behavior of an SBFD-aware UE on a UL subband, i.e., the terminal does not expect to send UL information outside the active UL BWP.

In a possible embodiment, a base station indicates a frequency domain resource occupied for UL data channel transmission via a FDRA field included in DCI. The FDRA field indicates a frequency domain resource within a UL BWP.

In a possible embodiment, when a base station configures a transmission with a Type 1 configured grant type, a frequency domain resource occupied by a corresponding PUSCH transmission needs to be configured within a UL BWP.

In a possible embodiment, for a procedure of other types of UL transmissions, such as a PUCCH and a sounding reference signal (SRS), the transmission resources also need to be configured within the frequency domain range of the UL BWP.

However, since the UL subband and the UL BWP may not necessarily align in the frequency domain, when the UL transmission occurs on different slots, if the slot includes an SBFD slot and a non-subband full-duplex slot (non-SBFD slot), available frequency domain resources of the SBFD slot and the non-SBFD slot are different. In this case, there is currently no explicit solution for indicating UL frequency domain resources on different slots using the same frequency domain resource indication information.

FIG. 2 is a diagram illustrating an interaction of a method for communication indication according to an embodiment of the disclosure. As shown in FIG. 2, embodiments of the disclosure relate to a method for communication indication. The method includes the following steps S2101 to S2106.

At step S2101, a terminal 101 sends capability indication information.

In some embodiments, an access network device 102 receives the capability indication information.

In some embodiments, the capability indication information indicates that the terminal 101 has a half-duplex capability.

In some embodiments, the capability indication information indicates that the terminal 101 has a full-duplex capability.

In some embodiments, the capability indication information indicates that the terminal 101 has any one capability of the half-duplex capability or the full-duplex capability.

In some embodiments, the capability indication information indicates that the terminal 101 supports UL communication on an SBFD slot.

At step S2102, the network device 102 sends first information to the terminal 101.

In some embodiments, the terminal 101 receives the first information.

In some embodiments, the first information is configured to configure a UL subband for the terminal 101.

In some embodiments, a name of the first information is not limited. For example, the first information is "UL subband configuration information".

In some embodiments, the first information includes one or more fields. The one or more fields indicate a time domain position of the UL subband and/or a frequency domain position of the UL subband.

In some embodiments, the UL subband may be semi-statically configured or dynamically configured. That is, the first information is semi-statically configured or dynamically configured. When the first information is dynamically configured, on the basis of a semi-static configuration, the time domain position, and/or the frequency domain position of the UL subband may activated or deactivated via the first information. The first information may be a medium-access-control control element (MAC CE).

In some embodiments, the frequency domain position of the UL subband or the time domain position of the UL subband is known. For example, the frequency domain position or the time domain position is statically configured. In this case, the first information is configured to configure a time domain position or a frequency domain position of the UL subband that is not statically configured.

Step S2101 is an optional step. For example, both the frequency domain position and the time domain position may be statically configured.

In some embodiments, the access network device 102 sends the first information when performing full-duplex communication with the terminal 101.

In some embodiments, when performing the full-duplex communication, the access network device 102 may simultaneously perform data reception and transmission within one slot.

In some embodiments, the first information may be a radio resource control (RRC) signaling, a MAC CE, or a dynamic indication signaling.

At step S2103, the terminal 101 determines the UL subband based on the first information.

In some embodiments, the terminal 101 reads a specific field in the first information.

In some embodiments, the terminal 101 determines the UL subband based on a specific field in the first information.

In some embodiments, the terminal 101 reads a specific indication field in the first information.

In some embodiments, the terminal 101 determines the UL subband based on a value in the specific indication field.

In some embodiments, the terminal 101 receives the first information via a physical downlink shared channel (PDSCH) or a physical downlink control channel (PDCCH).

In some embodiments, the first information may be carried by any one of the RRC signaling, the MAC CE, or the dynamic indication signaling.

At step S2104, the network device 102 sends second information to the terminal 101.

In some embodiments, the terminal 101 receives the second information.

In some embodiments, the second information is configured to schedule UL transmission.

In some embodiments, the second information indicates "a frequency domain resource used for the UL transmission in the UL subband".

In some embodiments, a name of the second information is not limited. For example, the second information is "frequency domain resource configuration information".

In some embodiments, the second information includes an "FDRA field".

In some embodiments, the network device 102 sends DCI. The DCI includes the second information.

In some embodiments, a bitmap in the FDRA field is configured to determine a UL frequency domain resource. The UL frequency domain resource includes an RBG. The bitmap indicates an RBG index corresponding to the RBG in the UL frequency domain resource.

In some embodiments, the UL frequency domain resource includes: a resource block (RB), a physical resource block (PRB), a PRB pair, an RB pair, a resource element (RE), or other related frequency domain resources.

In some embodiments, the terminal 101 receives the DCI. The DCI is, for example, DCI format 0-0, DCI format 0-1, DCI format 0-2, or DCI format 0-3, but is not limited herein. The DCI may also be any other DCI used for scheduling the UL transmission.

In some embodiments, an RBG index corresponding to an RBG in a UL BWP is determined based on an active UL BWP. In an example, each RBG is assigned with a corresponding unique RBG index.

In some embodiments, the RBG index corresponding to the RBG in the UL BWP is determined based on an initial UL BWP.

In some embodiments, a format of DCI used for scheduling the UL transmission has a fixed size and does not change based on a slot type in which the UL transmission scheduled by the DCI occurs.

In some embodiments, the UL transmission may be performed within the UL subband of the SBFD slot, or within an active UL BWP of a non-SBFD slot.

In some embodiments, a frequency domain resource allocation type for the UL transmission is RA type 0.

In some embodiments, an allocation mode of RA type 0 includes: indicating, by a base station, an RBG used for the UL transmission via the FDRA field in the DCI.

In some embodiments, the FDRA field includes a bitmap. The bitmap indicates the RBG index corresponding to the RBG. The indicated RBG is the UL frequency domain resource used by the terminal, or the indicated RBG includes the UL frequency domain resource used by the terminal.

In some embodiments, a granularity of the RBG in the UL BWP is determined by a size of the active UL BWP.

In some embodiments, the granularity refers to a number of RBs in the RBG.

In some embodiments, the RBG includes a plurality of RBs. A specific number of RBs included in each RBG is associated with the number of RBs included in a BWP. A specific association is shown in Table 1 below.

**Table 1**

| BWP size | configuration 1 | configuration 2 |
|---|---|---|
| 1-36 | 2 | 4 |
| 37-72 | 4 | 8 |
| 73-144 | 8 | 16 |
| 145-275 | 16 | 16 |

In an example, when a number of RBs included in the BWP is between 1 and 36, in configuration 1, each RBG includes 2 RBs, and the granularity of the RBG is 2 RBs; in configuration 2, each RBG includes 4 RBs, and the granularity of the RBG is 4 RBs.

In some embodiments, a frequency domain resource used for the UL transmission within the UL subband is the RBG. The RBG is determined by the bitmap in the FDRA field.

In some embodiments, a mapping relationship between the RBG and the bitmap in the FDRA field includes: mapping a most significant bit of the bitmap in the FDRA field to an RBG having a maximum RBG index in a UL BWP, and sequentially mapping other bits of the bitmap to other RBGs one-to-one; or mapping a most significant bit of the bitmap in the FDRA field to an RBG having a minimum RBG index in a UL BWP, and sequentially mapping other bits of the bitmap to other RBGs one-to-one.

In some embodiments, a mapping relationship between the RBG and the bitmap in the FDRA field includes: mapping a most significant bit of the bitmap in the FDRA field to an RBG having a maximum RBG index in the UL subband, and sequentially mapping other bits of the bitmap to other RBGs one-to-one; or mapping a most significant bit of the bitmap in the FDRA field to an RBG having a minimum RBG index in the UL subband, and sequentially mapping other bits of the bitmap to other RBGs one-to-one.

In some embodiments, an RBG corresponding to a position encoded as 1 in the bitmap is used for the UL transmission, and an RBG corresponding to a position encoded as 0 in the bitmap is not used for the UL transmission.

In some embodiments, an RBG corresponding to a position encoded as 0 in the bitmap is used for the UL transmission, and an RBG corresponding to a position encoded as 1 in the bitmap is not used for the UL transmission.

In some embodiments, if the frequency domain resource indicated by the bitmap exceeds a frequency domain range of the UL subband, then the resource included within the UL subband is used for the UL transmission. That is, a frequency domain resource not included within the frequency domain range of the UL subband is not used for the UL transmission.

In some embodiments, the terminal 101 has the half-duplex capability, or has the full-duplex capability.

In some embodiments, it is assumed that the network device 102 schedules the UL transmission of the terminal 101 via the DCI format 0-0, the DCI format 0-1, the DCI format 0-2, the DCI format 0-3, or any other DCI used for scheduling the UL transmission. The UL transmission may be within the UL subband of the SBFD slot, or within the active UL BWP of the non-SBFD slot, which is not limited in the disclosure.

In an example, the terminal 101 may be an SBFD aware UE.

In an example, the FDRA field in the DCI used for the UL scheduling is determined based on the active UL BWP, or determined based on the initial UL BWP. In summary, the DCI format used for scheduling the UL transmission has the fixed size and does not change based on the slot type in which the UL transmission scheduled by the DCI occurs.

In an example, the frequency domain resource allocation type for the UL transmission is the RA type 0. That is, the network device 102 indicates the RBG used for the UL transmission via the FDRA field (bitmap) in the DCI. In this embodiment, it is assumed that the RBG is still determined based on a size of the active BWP. Two examples are shown in the figures below. That is, regardless of a relative relationship between the UL subband and the active UL BWP, a granularity of the RBG is determined based on the active UL BWP.

In an example, a resource allocation situation for the SBFD aware UE on the UL subband includes: mapping a most significant bit in the FDRA field to the RBG having a maximum RBG index within the UL BWP, or mapping a most significant bit in the FDRA field to the RBG having a minimum RBG index within the UL BWP. Other bits are mapped to remaining RBGs one-to-one.

In an example, a resource allocation situation for the SBFD aware UE on the UL subband includes: mapping a most significant bit in the FDRA field to the RBG having a maximum RBG index within the UL subband, or mapping a most significant bit in the FDRA field to the RBG having a minimum RBG index within the UL subband. Other bits are mapped to remaining RBGs one-to-one.

In an example, the active UL BWP includes 10 RBGs. It is assumed that the network device 102 schedules the UL transmission of the SBFD aware UE on the UL subband within the SBFD slot. If a bitmap in the FDRA information field in the DCI is 1110000000 or 0000111000, it indicates that corresponding RBG#0, RBG#1, RBG#2 or RBG#4, RBG#5, RBG#6 in the active UL BWP are used for the UL transmission, respectively. Correspondingly, the terminal 101 determines a resource position used for the UL transmission within the UL subband based on the indication.

In an example, when the terminal 101 determines that the frequency domain resource indicated by the bitmap exceeds the frequency domain range of the UL subband, only a resource included within the UL subband is used for the corresponding UL transmission.

At step S2105, the terminal 101 determines the frequency domain resource in the UL subband based on the second information.

For the details of the terminal 101 determining the frequency domain resource in the UL subband based on the second information, reference may be made to the description of step S2103 and other parts above, which is not repeated herein.

In an example, when the terminal 101 determines that the frequency domain resource indicated by the bitmap exceeds the frequency domain range of the UL subband, only the resource included within the UL subband is used for the corresponding UL transmission.

In some embodiments, after determining the frequency domain resource in the UL subband, the terminal determines whether to use the frequency domain resource in the UL subband to perform the UL transmission based on other fields in the DCI.

In some embodiments, after determining the frequency domain resource in the UL subband, the terminal may determine whether to activate/deactivate the determined frequency domain resource based on the MAC CE. For example, the MAC CE includes a frequency activation field. The frequency activation field is configured to activate/deactivate the UL frequency domain resource/RBG/RB. The frequency activation field may include a frequency activation bitmap. A mechanism of the frequency activation bitmap is similar to the mechanism of the bitmap included in the FDRA field described above, which is not repeated herein.

In some embodiments, the terminal 101 has the half-duplex capability, or has the full-duplex capability.

In some embodiments, it is assumed that the network device 102 schedules the UL transmission of the terminal 101 via the DCI format 0-0, the DCI format 0-1, the DCI format 0-2, the DCI format 0-3, or any other DCI used for scheduling the UL transmission. The UL transmission may be within the UL subband of the SBFD slot, or within the active UL BWP of the non-SBFD slot.

In an example, the terminal 101 may be the SBFD aware UE.

In an example, the FDRA field in the DCI used for the UL scheduling is determined based on the active UL BWP, or determined based on the initial UL BWP. In summary, the DCI format used for scheduling the UL transmission has the fixed size and does not change based on the slot type in which the UL transmission scheduled by the DCI occurs.

In an example, the frequency domain resource allocation type for the UL transmission is RA type 0. That is, the network device 102 indicates the RBG used for the UL transmission via the FDRA field (bitmap) in the DCI. In this embodiment, it is assumed that the RBG is still determined based on the size of the active BWP. Two examples are shown in the figures below. That is, regardless of the relative relationship between the UL subband and the active UL BWP, the granularity of the RBG is determined based on the active UL BWP.

In an example, the resource allocation situation for the SBFD aware UE on the UL subband includes: mapping a most significant bit in the FDRA field to the RBG having a maximum RBG index within the UL BWP, or mapping a most significant bit in the FDRA field to the RBG having a minimum RBG index within the UL BWP. Other bits are mapped to remaining RBGs one-to-one.

In an example, the resource allocation situation for the SBFD aware UE on the UL subband includes: mapping a most significant bit in the FDRA field to the RBG having a maximum RBG index within the UL subband, or mapping a most significant bit in the FDRA field to the RBG having a minimum RBG index within the UL subband. Other bits are mapped to remaining RBGs one-to-one.

In an example, the active UL BWP includes 10 RBGs. It is assumed that the network device 102 schedules the UL transmission of the SBFD aware UE on the UL subband within the SBFD slot. If the bitmap in the FDRA information field in the DCI is 1110000000 or 0000111000, it indicates that corresponding RBG#0, RBG#1, RBG#2 or RBG#4, RBG#5, RBG#6 in the active UL BWP are used for the UL transmission, respectively. Correspondingly, the terminal 101 determines the resource position used for the UL transmission within the UL subband based on the indication.

In an example, when the terminal 101 determines that the frequency domain resource indicated by the bitmap exceeds the frequency domain range of the UL subband, only the resource included within the UL subband is used for the corresponding UL transmission.

In some embodiments, names of information and the like are not limited to the names recorded in embodiments. The terms such as "information", "message", "signal", "signaling", "report", "configuration", "indication", "instruction", "command", "channel", "parameter", "field", "symbol", "codepoint", "bit", "data" may be used interchangeably.

In some embodiments, the terms such as "UL", "physical UL" may be used interchangeably. The terms such as "DL", "physical DL" may be used interchangeably. The terms such as "side", "sidelink", "side communication", "sidelink communication", "direct", "direct link", "direct communication", "direct link communication" may be used interchangeably.

In some embodiments, the terms such as "DCI", "DL assignment", "DL DCI", "UL grant", "UL DCI" may be used interchangeably.

In some embodiments, the terms such as "PDSCH", "DL data" may be used interchangeably. The terms such as "PUSCH", "UL data" may be used interchangeably.

In some embodiments, the terms such as "radio", "wireless", "radio access network (RAN)", "access network (AN)", "RAN-based" and the like may be used interchangeably.

In some embodiments, the terms such as "synchronization signal (SS)", "synchronization signal block (SSB)", "reference signal (RS)", "pilot", "report", "pilot signal" may be used interchangeably.

In some embodiments, the terms such as "moment", "time point", "time", "time position" and the like may be interchangeable, and the terms such as "duration", "period", "time window", "window", "time" and the like may be interchangeable.

In some embodiments, the terms such as "wireless access scheme", "waveform" and the like may be interchangeable.

In some embodiments, the terms such as "frame", "radio frame", "reference signal (RS)", "subframe", "slot", "sub-slot", "mini-slot", "symbol", "transmission time interval (TTI)", may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bi-directionally transmit", "send and/or receive" and the like may be used interchangeably.

In some embodiments, the terms such as "certain", "preset", "predetermined", "set", "indicated", "a", "any", "first", and the like may be used interchangeable. "Certain A", "preset A", "predetermined A", "set A", "indicated A", "a A", "any A", "first A" may be interpreted as A predefined in a protocol, or as A obtained via setting, configuration, or indication, or as certain A, a A, any A, or first A, etc., but is not limited herein.

In some embodiments, the determination or judgment may be performed by a value represented by 1 bit (0 or 1), or by a true/false value (Boolean value) represented by true or false, or by comparison of numerical values (for example, comparison with a predetermined value), but is not limited herein.

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

The communication method in embodiments of the disclosure may include at least one of step S2101 to step S2104. For example, step S2101 may be implemented as an independent embodiment, step S2102 may be implemented as an independent embodiment, step S2103 may be implemented as an independent embodiment, step S2104 may be implemented as an independent embodiment, step S2101 and step S2103 may be implemented as an independent embodiment, step S2102 and step S2104 may be implemented as an independent embodiment, and step S2101, step S2102 and step S2103 may be implemented as an independent embodiment, which is not limited herein.

In some embodiments, reference may be made to other optional implementations described before or after the description corresponding to FIG. 2.

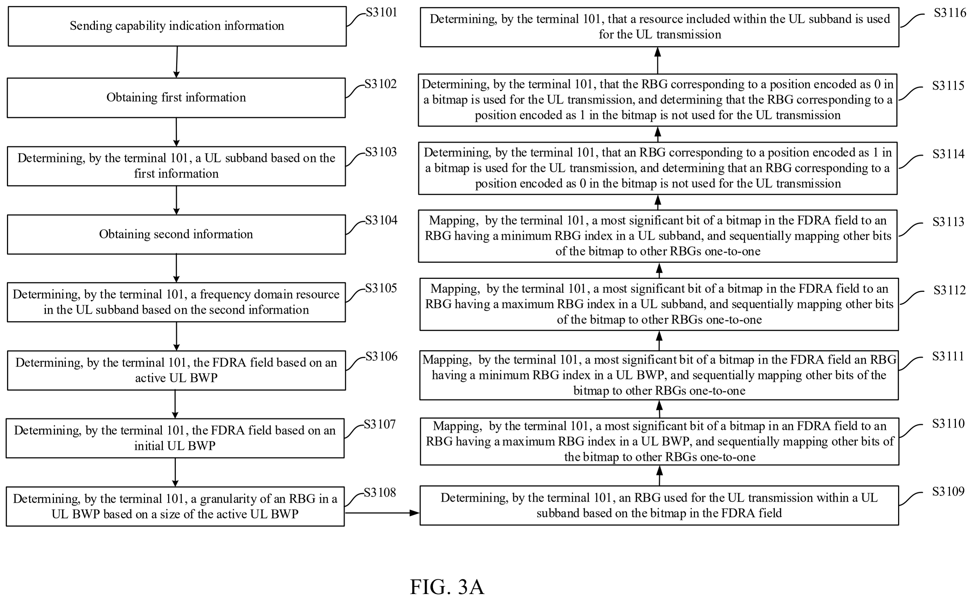

FIG. 3A is a flowchart illustrating a method for communication indication according to an embodiment of the disclosure. As shown in FIG. 3A, embodiments of the disclosure relate to a method for communication indication. The method includes the following steps S3101 to S3116.

At step S3101, capability indication information is sent.

For optional implementations of step S3101, reference may be made to the optional implementations of step S2101 in FIG. 2 and other related parts in embodiments related to FIG. 2, which are not repeated herein.

At step S3102, first information is obtained.

For optional implementations of step S3102, reference may be made to the optional implementations of step S2102 in FIG. 2 and other related parts in embodiments related to FIG. 2, which are not repeated herein.

In some embodiments, a terminal 101 receives the first information sent by a network device 102, but it is not limited herein. The terminal 101 may receive the first information sent by another entity.

In some embodiments, the terminal 101 obtains the first information specified by a protocol.

In some embodiments, the terminal 101 obtains the first information from an upper layer(s).

In some embodiments, the terminal 101 obtains the first information by performing processing.

In some embodiments, step S3101 is omitted. The terminal 101 autonomously implements a function indicated by the first information, or the function is default.

In some embodiments, the first information is configured to configure a UL subband for the terminal 101.

In some embodiments, a name of the first information is not limited. For example, the first information is "UL subband configuration information".

In some embodiments, the first information includes the UL subband configured by the network device 102 for the terminal 101.

At step S3103, the terminal 101 determines a UL subband based on the first information.

For optional implementations of step S3103, reference may be made to the optional implementations of step S2103 in FIG. 2 and other related parts in embodiments related to FIG. 2, which are not repeated herein.

In some embodiments, the first information is configured to configure the UL subband for the terminal 101.

In some embodiments, the UL subband is a UL subband configured by the network device 102.

In some embodiments, a name of the first information is not limited. For example, the first information is "UL subband configuration information".

In some embodiments, the first information includes the UL subband configured by the network device 102 for the terminal 101.

At step S3104, second information is obtained.

For optional implementations of step S3104, reference may be made to the optional implementations of step S2104 in FIG. 2 and other related parts in embodiments related to FIG. 2, which are not repeated herein.

In some embodiments, the terminal 101 receives the first information sent by a network device 102, but it is not limited herein. The terminal 101 may receive the first information sent by another entity.

At step S3105, the terminal 101 determines a frequency domain resource in the UL subband based on the second information.

For optional implementations of step S3105, reference may be made to the optional implementations of step S2105 in FIG. 2 and other related parts in embodiments related to FIG. 2, which are not repeated herein.

In some embodiments, the terminal 101 determines a frequency domain resource used for UL transmission in the UL subband based on the second information.

In some embodiments, the second information indicates "a frequency domain resource used for the UL transmission in the UL subband".

In some embodiments, a name of the second information is not limited. For example, the second information is "DCI", "frequency domain resource configuration information".

In some embodiments, the second information includes an "FDRA field".

In some embodiments, the DCI includes the second information. The DCI is, for example, DCI format 0-0, DCI format 0-1, DCI format 0-2, or DCI format 0-3, but is not limited herein. The DCI may also be any other DCI used for scheduling the UL transmission.

At step S3106, the terminal 101 determines the FDRA field based on an active UL BWP.

For optional implementations of step S3106, reference may be made to the optional implementations of step S2105 in FIG. 2 and other related parts in embodiments related to FIG. 2, which are not repeated herein.

At step S3107, the terminal 101 determines the FDRA field based on an initial UL BWP.

For optional implementations of step S3107, reference may be made to the optional implementations of step S2105 in FIG. 2 and other related parts in embodiments related to FIG. 2, which are not repeated herein.

In some embodiments, a DCI format used for scheduling the UL transmission has a fixed size and does not change based on a slot type in which the UL transmission scheduled by the DCI occurs.

In some embodiments, the UL transmission may be performed within the UL subband of the SBFD slot, or within the active UL BWP of a non-SBFD slot.

In some embodiments, a frequency domain resource allocation type for the UL transmission is RA type 0.

In some embodiments, an allocation method of RA type 0 includes: indicating, by a network device 102, an RBG used for the UL transmission via the FDRA field in UL DCI.

In some embodiments, the FDRA field includes a bitmap.

At step S3108, the terminal 101 determines a granularity of an RBG in a UL BWP based on a size of the active UL BWP.

For optional implementations of step S3108, reference may be made to the optional implementations of step S2105 in FIG. 2 and other related parts in embodiments related to FIG. 2, which are not repeated herein.

At step S3109, the terminal 101 determines the RBG used for the UL transmission within the UL subband based on the bitmap in the FDRA field.

For optional implementations of step S3109, reference may be made to the optional implementations of step S2105 in FIG. 2 and other related parts in embodiments related to FIG. 2, which are not repeated herein.

At step S3110, the terminal 101 maps a most significant bit of a bitmap in an FDRA field to an RBG having a maximum RBG index in a UL BWP, and sequentially maps other bits of the bitmap to other RBGs one-to-one.

For optional implementations of step S3110, reference may be made to the optional implementations of step S2105 in FIG. 2 and other related parts in embodiments related to FIG. 2, which are not repeated herein.

At step S3111, a most significant bit of a bitmap in the FDRA field is mapped to an RBG having a minimum RBG index in a UL BWP, and other bits of the bitmap are sequentially mapped to other RBGs one-to-one.

For optional implementations of step S3111, reference may be made to the optional implementations of step S2105 in FIG. 2 and other related parts in embodiments related to FIG. 2, which are not repeated herein.

At step S3112, the terminal 101 maps a most significant bit of a bitmap in the FDRA field to an RBG having a maximum RBG index in a UL subband, and sequentially maps other bits of the bitmap to other RBGs one-to-one.

For optional implementations of step S3112, reference may be made to the optional implementations of step S2104 in FIG. 2 and other related parts in embodiments related to FIG. 2, which are not repeated herein.

At step S3113, the terminal 101 maps a most significant bit of a bitmap in the FDRA field to an RBG having a minimum RBG index in a UL subband, and sequentially maps other bits of the bitmap to other RBGs one-to-one.

For optional implementations of step S3113, reference may be made to the optional implementations of step S2105 in FIG. 2 and other related parts in embodiments related to FIG. 2, which are not repeated herein.

At step S3114, the terminal 101 determines that an RBG corresponding to a position encoded as 1 in the bitmap is used for the UL transmission, and determines that an RBG corresponding to a position encoded as 0 in the bitmap is not used for the UL transmission.

For optional implementations of step S3114, reference may be made to the optional implementations of step S2105 in FIG. 2 and other related parts in embodiments related to FIG. 2, which are not repeated herein.

At step S3115, the terminal 101 determines that the RBG corresponding to a position encoded as 0 in a bitmap is used for the UL transmission, and determines that the RBG corresponding to a position encoded as 1 in the bitmap is not used for the UL transmission.

For optional implementations of step S3115, reference may be made to the optional implementations of step S2105 in FIG. 2 and other related parts in embodiments related to FIG. 2, which are not repeated herein.

At step S3116, the terminal 101 determines that a resource included within the UL subband is used for the UL transmission.

For optional implementations of step S3116, reference may be made to the optional implementations of step S2105 in FIG. 2 and other related parts in embodiments related to FIG. 2, which are not repeated herein.

In some embodiments, the frequency domain resource indicated by the bitmap exceeds a frequency domain range of the UL subband.

In some embodiments, the terminal 101 has a half-duplex capability, or has a full-duplex capability.

The communication method in embodiments of the disclosure may include at least one of step S3101 to step S3116. For example, step S3101 may be implemented as an independent embodiment, step S3102 may be implemented as an independent embodiment, step S3103 may be implemented as an independent embodiment, step S3104 may be implemented as an independent embodiment, step S3101 and step S3102 may be implemented as an independent embodiment, and step S3101, step S3102 and step S3103 may be implemented as an independent embodiment, which is not limited herein.

In some embodiments, step S3105 and step S3106 are optional, and one or more of the steps may be omitted or substituted in different embodiments.

In some embodiments, step S3109, step S3110, step S3111 and step S3112 are optional, and one or more of the steps may be omitted or substituted in different embodiments.

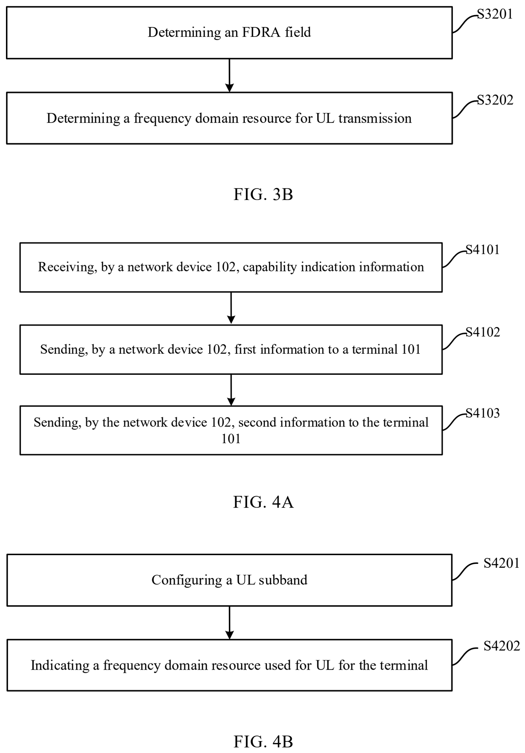

FIG. 3B is a flowchart illustrating a method for communication indication according to an embodiment of the disclosure. As shown in FIG. 3B, embodiments of the disclosure relate to a method for communication indication. The method includes the following steps S3201 to S3202.

At step S3201, an FDRA field is determined.

For optional implementations of step S3201, reference may be made to the optional implementations of step S2105 in FIG. 2, steps S3106 to S3107 in FIG. 3A, and other related parts in embodiments related to FIG. 2 and FIG. 3A, which are not repeated herein.

At step S3202, a frequency domain resource for UL transmission is determined.

For optional implementations of step S3202, reference may be made to the optional implementations of step S2105 in FIG. 2, steps S3108 to S3116 in FIG. 3A, and other related parts in embodiments related to FIG. 2 and FIG. 3A, which are not repeated herein.

The communication method in embodiments of the disclosure may include at least one of step S3201 and step S3202. For example, step S3301 may be implemented as an independent embodiment, and step S3202 may be implemented as an independent embodiment, which is not limited herein.

FIG. 4A is a flowchart illustrating a method for communication indication according to an embodiment of the disclosure. As shown in FIG. 4A, embodiments of the disclosure relate to a method for communication indication. The method includes the following steps S4101 to S4103.

At step S4101, a network device 102 receives capability indication information.

For optional implementations of step S4101, reference may be made to the optional implementations of step S2102 in FIG. 2 and other related parts in embodiments related to FIG. 2, which are not repeated herein.

At step S4102, the network device 102 sends first information to a terminal 101.

In some embodiments, the terminal 101 receives the first information.

In some embodiments, the first information is configured to configure the UL subband for the terminal 101.

In some embodiments, a name of the first information is not limited. For example, the first information is "UL subband configuration information".

For optional implementations of step S4102, reference may be made to the optional implementations of step S2102 in FIG. 2 and other related parts in embodiments related to FIG. 2, which are not repeated herein.

In some embodiments, the network device 102 sends the first information to the terminal 101, but it is not limited herein. The network device 102 may also send the first information to another entity.

At step S4103, the network device 102 sends second information to the terminal 101.

For optional implementations of step S4103, reference may be made to the optional implementations of step S2104 in FIG. 2 and other related parts in embodiments related to FIG. 2, which are not repeated herein.

The communication method in embodiments of the disclosure may include at least one of step S4101 and step S4103. For example, step S4101 may be implemented as an independent embodiment, step S4102 may be implemented as an independent embodiment, and step S4101 and step S4102 may be implemented as an independent embodiment, which is not limited herein.

In some embodiments, step S4105 and step S3106 are optional, and one or more of the steps may be omitted or substituted in different embodiments.

In some embodiments, step S3109, step S3110, step S3111 and step S3112 are optional, and one or more of the steps may be omitted or substituted in different embodiments.

FIG. 4B is a flowchart illustrating a method for communication indication according to an embodiment of the disclosure. As shown in FIG. 4B, embodiments of the disclosure relate to a method for communication indication. The method includes the following steps S4201 to S4202.

At step S4201, a UL subband is configured.

In an optional embodiment, step S4201 includes subordinate implementations. For optional implementations of step S4201, reference may be made to the optional implementations of step S2101 in FIG. 2, step S4101 in FIG. 4A, and other related parts in embodiments related to FIG. 2 and FIG. 4A, which are not repeated herein.

At step S4202, a frequency domain resource used for UL transmission is indicated.

In an optional embodiment, step S4202 includes subordinate implementations. For optional implementations of step S4202, reference may be made to the optional implementations of step S2103 in FIG. 2, step S4102 in FIG. 4A, and other related parts in embodiments related to FIG. 2 and FIG. 4A, which are not repeated herein.

The communication method in embodiments of the disclosure may include at least one of step S4201 and step S4202. For example, step S4201 may be implemented as an independent embodiment, step S4202 may be implemented as an independent embodiment, and step S4201 and step S4202 may be implemented as an independent embodiment, which is not limited herein.

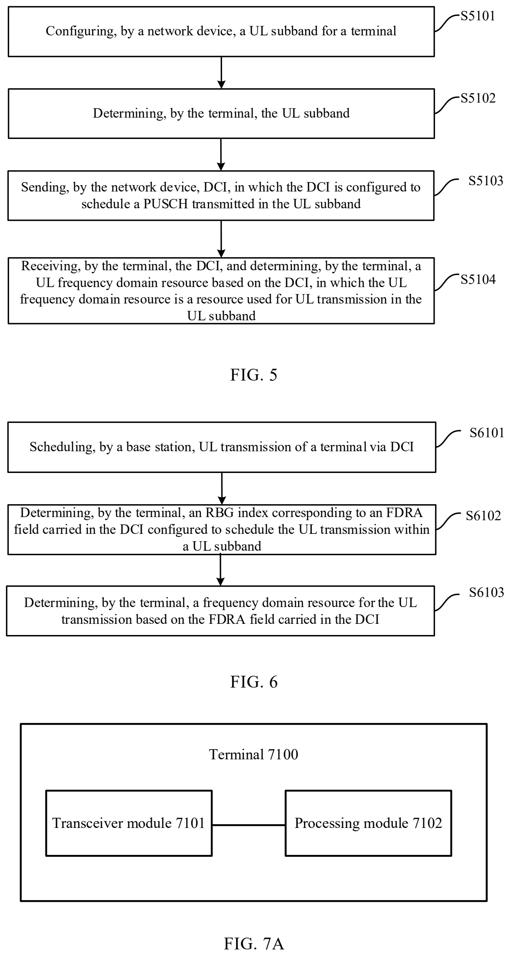

FIG. 5 is a flowchart illustrating a method for communication indication according to an embodiment of the disclosure. As shown in FIG. 5, embodiments of the disclosure relate to a method for communication indication. The method includes the following steps S5101 to S5104.

At step S5101, a network device configures a UL subband for a terminal.

For optional implementations of step S5101, reference may be made to the optional implementations of steps S2101 and S2102 in FIG. 2, steps S4201 and S4202 in FIG. 4, and other related parts in embodiments related to FIG. 2 and FIG. 4, which are not repeated herein.

At step S5102, the terminal determines the UL subband.

For optional implementations of step S5102, reference may be made to the optional implementations of step S2102 in FIG. 2, steps S3101 and S3102 in FIG. 3, and other related parts in embodiments related to FIG. 2, FIG. 3, and FIG. 4, which are not repeated herein.

At step S5103, the network device sends DCI, in which the DCI is configured to schedule a PUSCH transmitted in the UL subband.

For optional implementations of step S5103, reference may be made to the optional implementations of step S2103 in FIG. 2, step S4203 in FIG. 4, and other related parts in embodiments related to FIG. 2 and FIG. 4, which are not repeated herein.

At step S5104, the terminal receives the DCI, and determines a UL frequency domain resource based on the DCI, in which the UL frequency domain resource is a resource used for UL transmission in the UL subband.

For optional implementations of step S5104, reference may be made to the optional implementations of step S2104 in FIG. 2, steps S3104 to S3116 in FIG. 3, and other related parts in embodiments related to FIG. 2 and FIG. 3, which are not repeated herein.

In some embodiments, the method may include the methods of the above embodiments from the perspective of a communication system side, a terminal side, a network device side, etc., which are not repeated herein.

FIG. 6 is a flowchart illustrating a method for communication indication according to an embodiment of the disclosure. As shown in FIG. 6, embodiments of the disclosure relate to a method for communication indication. The method includes the following steps S6101 to S6103.

At step S6101, a base station schedules UL transmission of a terminal via DCI.

In an example, the DCI is DCI format 0-0, DCI format 0-1, DCI format 0-2, DCI format 0-3, or any other DCI used for scheduling the UL transmission.

In an example, the UL transmission may be performed within a UL subband of an SBFD slot, or within an active UL BWP of a non-SBFD slot.

In an example, the terminal may be an SBFD aware UE.

In an example, the base station performs a full-duplex operation within a DL slot of a time division duplexing (TDD) frequency band. That is, DL data and UL data are scheduled simultaneously.

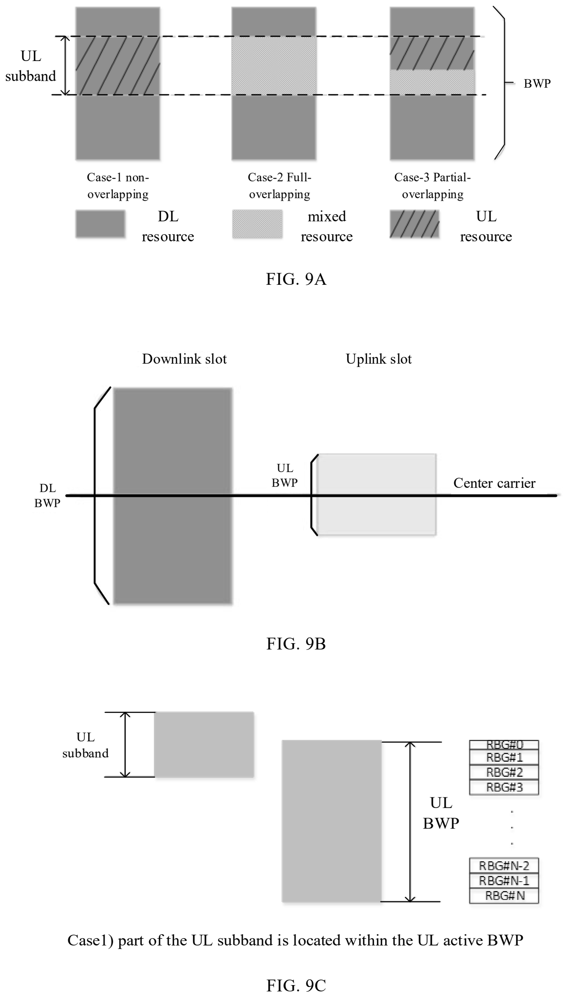

FIG. 9A is a schematic diagram illustrating a BWP according to an embodiment of the disclosure. As shown in FIG. 9A, frequency domain resources used for the UL transmission and DL transmission within the same slot have the following three cases.

In case 1, the frequency domain resources used for the DL transmission and the UL transmission within a DL slot are independent of each other and do not overlap.

In case 2, the frequency domain resources used for the DL transmission and the UL transmission within a DL slot completely overlap.

In case 3, the frequency domain resources used for the DL transmission and the UL transmission within a DL slot partially overlap.

In an example, a TDD UL-DL configuration of a current system is DDDDDDSUUU, in which D represents a DL slot and U represents a UL slot. A bandwidth of a DL BWP in the DL slot is different from a bandwidth of a UL BWP in the UL slot. For a TDD frequency band, center frequencies of the DL BWP and the UL BWP need to be aligned. FIG. 9B is a schematic diagram illustrating a BWP according to an embodiment of the disclosure. As shown in FIG. 9B, the center frequencies of the DL BWP and the UL BWP are aligned.

At step S6102, the terminal determines an RBG index corresponding to an FDRA field carried in the DCI configured to schedule the UL transmission within a UL subband.

In an example, the terminal determines the RBG Index corresponding to the RBG in the UL BWP based on the active UL BWP.

In an example, the terminal determines the RBG Index corresponding to the RBG in the UL BWP based on an initial UL BWP.

In an example, the RBG index corresponds to the FDRA field in the DCI.

In an example, each bit in a bitmap in the FDRA field corresponds to one RBG index.

In an example, each bit in a bitmap in the FDRA field corresponds to a plurality of RBG indices.

In an example, a DCI format used for scheduling the UL transmission has a fixed size and does not change based on a slot type in which the UL transmission scheduled by the DCI occurs.

At step S6103, the terminal determines a frequency domain resource for the UL transmission based on the FDRA field carried in the DCI.

In an example, a frequency domain resource allocation type for the UL transmission is RA type 0. That is, an access network device indicates the RBG used for the UL transmission via a bitmap in the FDRA field in UL DCI.

In an example, the RBG is still determined based on a size of an active BWP.

In an example, regardless of a relative relationship between the UL subband and the active UL BWP, a granularity of the RBG is determined based on the active UL BWP.

A most significant bit in the FDRA field is mapped to an RBG having a maximum RBG index in the UL BWP, or a most significant bit in the FDRA field is mapped to an RBG having a minimum RBG Index in the UL BWP. Other bits are mapped to remaining RBGs one-to-one.

In an example, a resource allocation situation for the SBFD aware UE on the UL subband includes: mapping a most significant bit in the FDRA field to an RBG having a maximum RBG index within the UL subband, or mapping a most significant bit in the FDRA field to an RBG having a minimum RBG index within the UL subband. Other bits are mapped to remaining RBGs one-to-one.

FIG. 9C is a schematic diagram illustrating a BWP and a UL subband according to an embodiment of the disclosure. As shown in FIG. 9C, a most significant bit in an FDRA field is mapped to an RBG having a maximum RBG index in a UL BWP, and other bits are mapped to remaining RBGs one-to-one. That is, a most significant bit in a bitmap corresponds to RBG#0, and other bits correspond to RBG#1 to RBG#N, respectively.

In a possible embodiment, a part of a frequency domain range of the UL subband is located within the UL BWP. There are 10 RBGs in the UL BWP, and the bitmap in the FDRA information field in the DCI is 1110000000. An RBG corresponding to a position encoded as 1 in the bitmap is used for the UL transmission. Thus, RBG#0, RBG#1, and RBG#2 are determined as resource positions for the UL transmission.

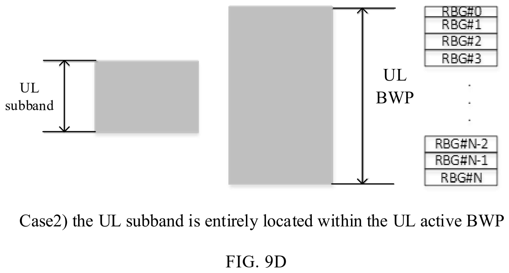

FIG. 9D is a schematic diagram illustrating a BWP and a UL subband according to an embodiment of the disclosure. As shown in FIG. 9D, a most significant bit in an FDRA field is mapped to an RBG having a maximum RBG index in a UL BWP, and other bits are mapped to remaining RBGs one-to-one. That is, the most significant bit in a bitmap corresponds to RBG#0, and other bits correspond to RBG#1 to RBG#N, respectively.

A part of a frequency domain range of the UL subband is located within the UL BWP. There are 10 RBGs in the UL BWP, and the bitmap in the FDRA information field in the DCI is 0000111000. An RBG corresponding to a position encoded as 1 in the bitmap is used for the UL transmission. Thus, RBG#4, RBG#5, and RBG#6 are determined as resource positions for the UL transmission. Correspondingly, the terminal determines a resource position for the UL transmission within the UL subband based on the indication.

In an example, a resource allocation situation for the SBFD aware UE on the UL subband includes: mapping a most significant bit in the FDRA field to the RBG having a maximum RBG index within the UL subband, or mapping a most significant bit in the FDRA field to the RBG having a minimum RBG index within the UL subband. Other bits are mapped to remaining RBGs one-to-one.

In an example, the active UL BWP includes 10 RBGs. It is assumed that the network device 102 schedules the UL transmission of the SBFD aware UE on the UL subband within the SBFD slot. If the bitmap in the FDRA information field in the DCI is 1110000000 or 0000111000, it indicates that corresponding RBG#0, RBG#1, RBG#2 or RBG#4, RBG#5, RBG#6 in the active UL BWP are used for the UL transmission, respectively. Correspondingly, the terminal 101 determines a resource position used for the UL transmission within the UL subband based on the indication.

In an example, when the terminal 101 determines that the frequency domain resource indicated by the bitmap exceeds the frequency domain range of the UL subband, only a resource included within the UL subband is used for the corresponding UL transmission.

The communication method in embodiments of the disclosure may include at least one of step S6101 and step S6103. For example, step S6101 may be implemented as an independent embodiment, step S6102 may be implemented as an independent embodiment, step S6103 may be implemented as an independent embodiment, step S6102 and step S6103 may be implemented as an independent embodiment, and step S6101, step S6102 and step S6103 may be implemented as an independent embodiment, which is not limited herein.

In embodiments of the disclosure, some or all steps and their optional implementations may be arbitrarily combined with some or all steps in other embodiments, and may also be arbitrarily combined with optional implementations of other embodiments.

Embodiments of the disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network functional node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a block diagram illustrating a terminal according to an embodiment of the disclosure. The terminal may be the first terminal. As shown in FIG. 7A, the terminal 7100 may include at least one of: a transceiver module 7101, or a processing module 7102. In some embodiments, the transceiver module 7101 is configured to obtain a UL subband configured by an access network device and determine a FDRA field in DCI for scheduling a PUSCH transmitted in the UL subband. The processing module is configured to determine a frequency domain resource used for UL transmission within the UL subband based on the FDRA field.

Optionally, the transceiver module is configured to perform at least one of the communication steps (e.g., step S2102, but is not limited herein) such as sending and/or receiving performed by the terminal 101 in any of the above methods, which is not repeated herein. In an example, the processing module is configured to perform at least one of other steps (e.g., step S2104, but not limited herein) performed by the terminal 101 in any of the above methods, which is not repeated herein.

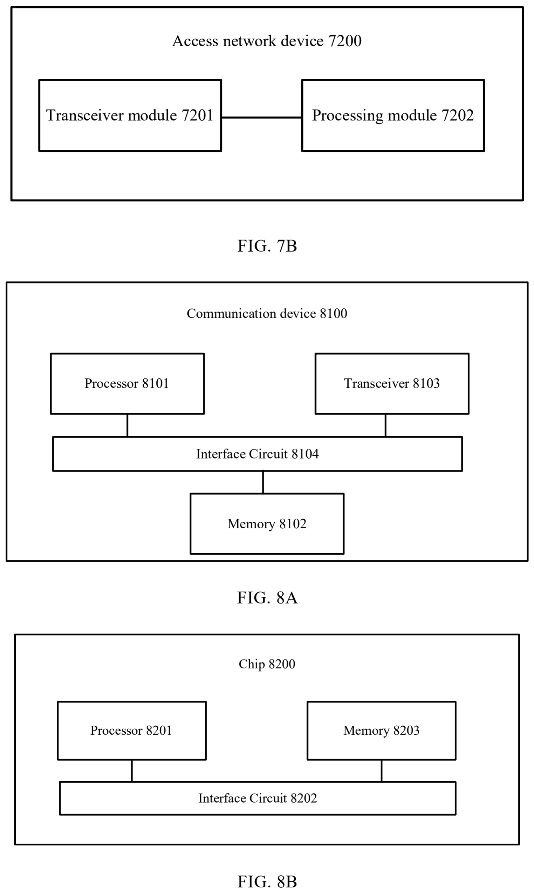

FIG. 7B is a block diagram illustrating an access network device according to an embodiment of the disclosure. As shown in FIG. 7B, the access network device 7200 may include at least one of: a transceiver module 7201. In some embodiments, the transceiver module is configured to configure a UL subband for a terminal; and indicate a UL frequency domain resource used for UL transmission in the UL subband of the terminal via a FDRA field included in DCI.

In an example, the transceiver module is configured to perform at least one of the communication steps (e.g., step S2101, step S2102, but not limited herein) such as sending and/or receiving performed by the network device 102 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules may respectively perform all or part of the steps required to be performed by the processing module. Optionally, the processing module may be interchangeable with a processor.

FIG. 8A is a block diagram of a communication device 8100 according to an embodiment of the disclosure. The communication device 8100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the method in the above method embodiments. For details, reference may be made to the description in the above method embodiments.

As shown in FIG. 8A, the communication device 8100 may include one or more processors 8101. The processor 8101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU, or CU, etc.), execute a computer program, and process data of the computer program. The communication device 8100 is configured to execute any one of the above methods.

In some embodiments, the communication device 8100 may also include one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above method (e.g., step S2101, step S2103, but not limited herein), and the processor 8101 performs at least one of other steps (e.g., step S2102, step S2104, but not limited herein).

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more interface circuits 8104. The interface circuit 8104 is connected to the memory 8102. The interface circuit 8104 may be configured to receive signals from the memory 8102 or other devices, and may be configured to send the signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the disclosure is not limited, and a structure of the communication device 8100 may not be limited by FIG. 8A. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 8B is a block diagram of a chip 8200 according to an embodiment of the disclosure. For a case where the communication device 8100 may be a chip or a chip system, reference may be made to the block diagram of the chip 8200 shown in FIG. 8B, which it is not limited herein.

The chip 8200 includes one or more processors 8201. The chip 8200 is configured to execute any one of the above methods.

In some embodiments, the chip 8200 further includes one or more interface circuits 8202. The interface circuit 8202 is connected to a memory 8203. The interface circuit 8202 may be configured to receive signals from the memory 8203 or other devices, and may be configured to send the signals to the memory 8203 or other devices. For example, the interface circuit 8202 may read the instructions stored in the memory 8203 and send the instructions to the processor 8201.

In some embodiments, the interface circuit 8202 performs at least one of the communication steps such as sending and/or receiving in the above method (e.g., step S2101, step S2103, but not limited herein), and the processor 8201 performs at least one of other steps (e.g., step S2102, step S2104, but not limited herein).

In some embodiments, terms such as interface circuit, interface, transceiver pin, transceiver, etc. may be used interchangeably.

In some embodiments, the chip 8200 further includes one or more memories 8203 for storing instructions. In an example, all or some of the memories 8203 may be located outside the chip 8200.

The disclosure also provides a storage medium for storing instructions. When the instructions are running on the communication device 8100, the communication device 8100 is caused to implement any one of the above methods. In an example, the above storage medium is an electronic storage medium. In an example, the above storage medium is a computer-readable storage medium, which is not limited herein. The above storage medium may also be a storage medium readable by other devices. In an example, the above storage medium may be a non-transitory storage medium, which is not limited to herein. The above storage medium may also be a transitory storage medium.

The disclosure also provides a program product. When the program product is executed by the communication device 8100, the communication device 8100 is caused to implement any one of the above methods. In an example, the above program product is a computer program product.

The disclosure also provides a computer program. When the computer program is running on a computer, the computer is caused to implement any one of the above methods.

## Claims

1. A method for communication indication, comprising:
determining an uplink (UL) subband;
receiving downlink control information (DCI), wherein the DCI is configured to schedule a physical uplink shared channel (PUSCH) transmitted in the UL subband; and
determining a UL frequency domain resource based on the DCI, wherein the UL frequency domain resource is a resource used for UL transmission in the UL subband.

2. The method according to claim 1, wherein the DCI comprises a frequency domain resource assignment (FDRA) field, and the FDRA field is configured to determine the UL frequency domain resource.

3. The method according to claim 2, wherein determining the UL frequency domain resource based on the DCI comprises:
determining the UL frequency domain resource based on a bitmap in the FDRA field, wherein the UL frequency domain resource comprises a resource block group (RBG), and the bitmap indicates an RBG index corresponding to the RBG in the UL frequency domain resource.

4. The method according to claim 3, wherein determining the UL frequency domain resource based on the bitmap in the FDRA field comprises:
mapping a most significant bit of the bitmap in the FDRA field to an RBG having a maximum RBG index in a UL bandwidth part (BWP), and sequentially mapping other bits of the bitmap to other RBGs; or
mapping a most significant bit of the bitmap in the FDRA field to an RBG having a minimum RBG index in a UL BWP, and sequentially mapping other bits of the bitmap to other RBGs.

5. The method according to claim 3, wherein determining the UL frequency domain resource based on the bitmap in the FDRA field further comprises:
mapping a most significant bit of the bitmap in the FDRA field to an RBG having a maximum RBG index in the UL subband, and sequentially mapping other bits of the bitmap to other RBGs; or
mapping a most significant bit of the bitmap in the FDRA field to an RBG having a minimum RBG index in the UL subband, and sequentially mapping other bits of the bitmap to other RBGs.

6. The method according to any one of claims 3 to 5, wherein an RBG corresponding to a position encoded as 1 in the bitmap is used for the UL transmission.

7. The method according to any one of claims 3 to 6, wherein the bitmap indicates a first frequency domain resource, the first frequency domain resource comprises a first RBG, the first RBG is not located within a frequency domain range of the UL subband, and the first RBG does not belong to the UL frequency domain resource.

8. The method according to any one of claims 1 to 7, further comprising:
determining an RBG index corresponding to an RBG in a UL BWP based on an active UL BWP; or
determining an RBG index corresponding to an RBG in a UL BWP based on an initial UL BWP.

9. The method according to any one of claims 1 to 8, further comprising:
determining a granularity of an RBG in a UL BWP based on a size of an active UL BWP; or
determining a granularity of an RBG in a UL subband based on a size of an active UL BWP.

10. The method according to any one of claims 1 to 9, wherein a frequency domain resource allocation (RA) type for the UL transmission is a resource allocation type 0 (RA type 0).

11. The method according to any one of claims 1 to 10, wherein the DCI is any one of:
DCI format 0-0;
DCI format 0-1;
DCI format 0-2; or
DCI format 0-3.

12. A method for communication indication, comprising:
configuring an uplink (UL) subband for a terminal; and
sending downlink control information (DCI), wherein the DCI is configured to schedule a physical uplink shared channel (PUSCH) transmitted in the UL subband; the DCI indicates a UL frequency domain resource; and the UL frequency domain resource is a resource used for UL transmission in the UL subband.

13. The method according to claim 12, wherein the DCI comprises a frequency domain resource assignment (FDRA) field, and the FDRA field is configured to determine the UL frequency domain resource.

14. The method according to claim 13, wherein a bitmap in the FDRA field is configured to determine the UL frequency domain resource, the UL frequency domain resource comprises a resource block group (RBG), and the bitmap indicates an RBG index corresponding to the RBG in the UL frequency domain resource.

15. The method according to claim 14, wherein a mapping relationship between the bitmap in the FDRA field and the UL frequency domain resource comprises:
mapping a most significant bit of the bitmap in the FDRA field to an RBG having a maximum RBG index in a UL bandwidth part (BWP), and sequentially mapping other bits of the bitmap to other RBGs; or
mapping a most significant bit of the bitmap in the FDRA field to an RBG having a minimum RBG index in a UL BWP, and sequentially mapping other bits of the bitmap to other RBGs.

16. The method according to claim 14, wherein a mapping relationship between the bitmap in the FDRA field and the UL frequency domain resource further comprises:
mapping a most significant bit of the bitmap in the FDRA field to an RBG having a maximum RBG index in the UL subband, and sequentially mapping other bits of the bitmap to other RBGs; or
mapping a most significant bit of the bitmap in the FDRA field to an RBG having a minimum RBG index in the UL subband, and sequentially mapping other bits of the bitmap to other RBGs.

17. The method according to any one of claims 14 to 16, wherein an RBG corresponding to a position encoded as 1 in the bitmap is used for the UL transmission.

18. The method according to any one of claims 14 to 17, wherein the bitmap indicates a first frequency domain resource, the first frequency domain resource comprises a first RBG, the first RBG is not located within a frequency domain range of the UL subband, and the first RBG does not belong to the UL frequency domain resource.

19. The method according to any one of claims 12 to 18, wherein an RBG index corresponding to an RBG in a UL BWP is determined by an active UL BWP; or
an RBG index corresponding to an RBG in a UL BWP is determined by an initial UL BWP.

20. The method according to any one of claims 12 to 19, further comprising:
determining a granularity of an RBG in a UL BWP based on a size of an active UL BWP; or
determining a granularity of an RBG in a UL subband based on a size of an active UL BWP.

21. The method according to any one of claims 12 to 20, wherein a frequency domain resource allocation (RA) type for the UL transmission is a resource allocation type 0 (RA type 0).

22. The method according to any one of claims 1 to 21, wherein the DCI is any one of:
DCI format 0-0;
DCI format 0-1;
DCI format 0-2; or
DCI format 0-3.

23. A method for communication indication, comprising:
configuring, by a network device, an uplink (UL) subband for a terminal;
determining, by the terminal, the UL subband;
sending, by the network device, downlink control information (DCI), wherein the DCI is configured to schedule a physical uplink shared channel (PUSCH) transmitted in the UL subband; and
receiving, by the terminal, the DCI, and determining a UL frequency domain resource based on the DCI, wherein the UL frequency domain resource is a resource used for UL transmission in the UL subband.

24. The method according to claim 23, wherein the DCI comprises a frequency domain resource assignment (FDRA) field, and the FDRA field is configured to determine the UL frequency domain resource.

25. The method according to claim 24, wherein determining the UL frequency domain resource based on the DCI comprises:
determining, by the terminal, the UL frequency domain resource based on a bitmap in the FDRA field, wherein the UL frequency domain resource comprises a resource block group (RBG), and the bitmap indicates an RBG index corresponding to the RBG in the UL frequency domain resource.

26. A terminal, comprising:
one or more processors;
wherein the terminal is configured to implement the method according to any one of claims 1 to 11.

27. An access network device, comprising:
one or more processors;
wherein the access network device is configured to implement the method according to any one of claims 13 to 22.

28. A communication system, comprising a terminal, configured to implement the method according to any one of claims 1 to 11, and an access network device, configured to implement the method according to any one of claims 12 to 22.

29. A storage medium storing instructions, wherein the instructions, when executed on a communication device, cause the communication device to implement the method according to any one of claims 1 to 11, or to implement the method according to any one of claims 12 to 22.
